# EUROPÄISCHE PATENTSCHRIFT

(11) **EP 2 148 053 B1**
(45) Veröffentlichungstag und Bekanntmachung des Hinweises auf die Patenterteilung: **04.06.2014**
(21) Anmeldenummer: 09009686.8
(22) Anmeldetag: 27.07.2009
(51) Int. Cl.: F01N 3/20, F01N 3/08

(54) **Katalysatoranordnung zur Reinigung eines Abgasstroms**
Catalyst assembly for cleaning an exhaust gas flow
Agencement de catalyseurs destiné au nettoyage d'un flux de gaz d'échappement

(30) Priorität: 25.07.2008 DE 102008034993; 06.10.2008 DE 102008050101
(43) Veröffentlichungstag der Anmeldung: 27.01.2010
(73) Patentinhaber: Volkswagen Aktiengesellschaft, 38440 Wolfsburg (DE)
(72) Erfinder: Düsterdiek, Thorsten, Dr., 30659 Hannover (DE)
(74) Vertreter: Pohlmann, Bernd Michael

(56) Entgegenhaltungen:
- EP-A2- 1 908 932
- DE-A1- 4 230 054
- DE-A1-102006 059 507
- DE-A1-102007 055 874
- FR-A1- 2 891 305
- JP-A- 2003 184 551
- JP-A- 2005 076 460
- JP-A- 2005 214 176
- JP-A- 2006 077 691
- JP-A- 2007 071 161
- US-A1- 2007 122 317

## Beschreibung

Die Erfindung betrifft eine Katalysatoranordnung zur Reinigung eines Abgasstroms eines Verbrennungsmotors eines Kraftfahrzeuges mittels einer selektiven katalytischen Reduktion.

Katalysatoranordnungen zur Reinigung eines Abgasstroms mittels einer selektiven katalytischen Reduktion können für unterstöchiometrisch betreibbare Verbrennungsmotoren eingesetzt werden, beispielsweise Dieselmotoren oder Magermotoren mit Fremdzündung. Dem Abgasstrom kann stromaufwärts eines SCR-Katalysators ein Reduktionsmittel und/oder eine Vorstufe davon, insbesondere Ammoniak und/oder Harnstoff, insbesondere eine wässrige Harnstofflösung, zugegeben werden. Aus der DE 10 2007 000 526 A1 ist eine Abgasreinigungsvorrichtung für eine Kraftmaschine bekannt. Aus der DE 10 2006 031 659 A1 ist eine Anordnung zur Verminderung von Stickoxiden in Abgasen bekannt. Zur Umsetzung von Stickoxiden ist vorgesehen, stromab einer Kombination aus einem ersten SCR-Katalysator und einem ersten NH₃-Oxidationskatalysator wenigstens einen zweiten Katalysator mit SCR-Aktivität nachzuschalten. Aus der DE 10 2006 058 715 B3 sowie der DE 10 2006 055 036 A1 sind ein statischer Mischer für eine Abgasanlage eines brennkraftmaschinenbetriebenen Fahrzeuges, insbesondere Kraftfahrzeuges bzw. ein Mischelement sowie Abgasanlage für eine Verbrennungskraftmaschine bekannt.

Ein wesentlicher Schlüssel zum Erreichen von hohen NOx-Konvertierungsraten ist eine gute Verdampfung und Vermischung des eindosierten Mediums mit dem Abgasstrom, derart dass der Katalysator gleichmäßig mit dem Medium beziehungsweise dem Reduktionsmittel beaufschlagt wird. Stromabwärts des Dosiermoduls ist üblicherweise ein Mischelement, das auf den Abgasstrom wirkt, in der Abgasleitung angeordnet, dem ein oder mehrere SCR-Katalysatoren nachgeschaltet sind Aus der DE 10 2006 058 715 B3 sowie der DE 10 2006 055 036 A1 sind ein statischer Mischer für eine Abgasanlage eines mit einer Brennkraftmaschine betriebenen Fahrzeuges, insbesondere Kraftfahrzeuges bzw. ein Mischelement sowie Abgasanlage für eine Verbrennungskraftmaschine bekannt.

Üblicherweise ist das Dosiermodul an einer Anbindungsstelle mit einem bestimmten Winkel schräg zur Strömungsrichtung des Abgases an einen geraden Abschnitt des Abgasrohr geschweißt. Eine mittels dieser Anordnung vorgenommene Dosierung hat den Nachteil einer starken Rezirkulation das Abgases im Bereich der Anbindungsstelle mit einem partiellen Rücktransport des eindosierten Mediums. Ferner kann eine Teilmenge des eindosierten Mediums auf die gegenüberliegende Wandung des Abgasrohrs treffen und zu einer starken Wandbenetzung mit einer erhöhten Gefahr von Ablagerungen an der Wandung führen. Bei der genannten Anordnung wird das Mischelement nicht symmetrisch und vollflächig von dem Medium beaufschlagt, sodass das Verdampfen des Mediums im Abgas verlangsamt wird und die Gefahr eines Auftreffens von größeren Tröpfchens des Mediums auf den SCR-Katalysator erhöht wird.

Aus dem Dokument EP 1 438 491 B1 ist eine Gasbehandlungsvorrichtung zu Behandlung eines Abgasstroms bekannt, mit einem Mischbereich in dem eine Injektornadel angeordnet ist, um den Gasstrom ein Reduktionsmittel zuzusetzen. Der Mischbereich ist stromabwärts eines gekrümmten Abschnitts der Abgasleitung angeordnet, wobei der Injektor sich von dem Wandbereich der Abgasleitung In das Innere der Abgasleitung hin erstreckt und Auslassöffnungen aufweist, die im Bereich eines Mantels angeordnet sind. Der Mantel teilt den Abgasstrom in zumindest einen inneren und einen äußeren Strom und dient der Kontrolle der radialen Verteilung des Reduktionsmittels innerhalb der beiden Strömungen. Diese bekannte Vorrichtung hat den Nachteil, dass die sich in das Innere der Abgasleitung erstreckende Injektornadel in vollem Umfang den Kräften und der Temperatur der Abgasströmung ausgesetzt ist und daher einen erhöhten Konstruktionsaufwand erfordert.

Aus der US 200710122317 A1 ist bereits ein System zur selektiven Katalytischen Reduktion bekannt mit einem ersten selektiven katalytischen Reduktionskatalysator, einem zweiten selektiven katalytischen Reduktionskatalysator und einem System zur Produktion von Ammoniak. Zwischen dem ersten Reduktionskatalysator und dem zweiten Reduktionskatalysator ist dabei ein diese verbindendes Rohr angeordnet, in dem ein statischer Mixer angeordnet ist.

Aufgabe der Erfindung ist es, eine verbesserte Katalysatoranordnung bereitzustellen, um eine verbesserte Mischung des Reduktionsmittels Im Abasstrom zu ermöglichen.

Die Aufgabe ist mit einer Katalysatoranordnung zur Reinigung eines Abgasstroms eines Verbrennungsmotors eines Kraftfahrzeuges mittels einer selektiven katalytischen Reduktion, mit einem ersten SCR-Katalysator zum Durchführen der selektiven katalytischen Reduktion, einem dem ersten SCR-Katalysator nachgeschalteten zweiten SCR-Katalysator zum Durchführen der selektiven katalytischen Reduktion und einem zwischen die SCR-Katalysatoren geschalteten Rohrstück zum Leiten des Abgasstroms von dem ersten SCR-Katalysator in den zweiten SCR-Katalysator gelöst. Vorteilhaft kann mittels des zwischengeschalteten Rohrstücks eine verbesserte Durchmischung des Abgasstroms und damit eine geringere Strähnigkeit des Abgasstroms erzielt werden. Vorteilhaft lässt sich dadurch eine Umsetzungsrate von in dem Abgasstrom mitgeführten Schadstoffen mittels der selektiven katalytischen Reduktion verbessern. Außerdem kann vorteilhaft stromabwärts des zweiten SCR-Katalysators aufgrund der besseren Durchmischung des Abgasstroms eine genauere und bessere Überwachung der Konvertierungsrate der SCR-Katalysatoren erfolgen.

Es ist vorgesehen, dass ein zweiter statischer Mischer an der Einschnürung des Rohrstücks, insbesondere an einer Querschnitt-minimalen Position einer Venturi-Düse, angeordnet ist. An der Einschnürung bzw. der Querschnitt-minimalen Position ergeben sich die größte Geschwindigkeit und ein minimaler Druck des Abgasstroms. Beides begünstigt eine optimale Vermischung und auch eine bestmögliche Lösung, insbesondere einer wässrigen Harnstofflösung, des Reduktionsmittels in dem Abgasstrom. Mittels der Venturi-Düse können für Druckdifferenzen und unterschiedliche Geschwindigkeiten des Abgasstroms realisiert werden, die vorteilhaft zu einer besseren Durchmischung des Abgasstroms beitragen können.

Bei einem weiteren Ausführungsbeispiel der Katalysatoranordnung ist vorgesehen, dass der erste SCR-Katalysator kleiner ausgelegt ist als der zweite SCR-Katalysator. Vorteilhaft kann der erste SCR-Katalysator vergleichsweise klein und kostengünstlg ausgelegt werden und kann eine Vorkonditionierung bzw. bestmögliche Aufbereitung des Abgasstroms für den zweiten nachgeschalteten SCR-Katalysator bewirken.

Bei einem weiteren Ausführungsbeispiel der Katalysatoranordnung ist vorgesehen, dass zumindest einer der folgenden auf den Abgasstrom wirkenden Mischer vorgesehen ist: ein dem ersten SCR-Katalysator vorgeschalteter erster statischer Mischer, ein dem zweiten SCR-Katalysator nachgeschalteter dritter statischer Mischer, ein dynamischer Mischer, ein Drallelement, und/oder ein Plattenmischer. Vorteilhaft kann mittels des zumindest einen Mischers die Durchmischung des Abgasstroms verbessert werden, was vorteilhaft eine bessere Umsetzung der Schadstoffe mittels der SCR-Katalysatoren und auch eine bessere Überwachbarkeit der Umsetzungsrate bewirkt.

Bei einem weiteren Ausführungsbeispiel der Katalysatoranordnung ist vorgesehen, dass das Rohrstück LSI-Technik (Liquid Silicon Infiltration) aufweist. Vorteilhaft können mittels der LSI-Technik an dem Rohrstück auftretende Temperaturverluste minimiert werden.

Bei einem weiteren Ausführungsbeispiel der Katalysatoranordnung ist vorgesehen, dass dem zweiten SCR-Katalysator ein Ausgangstrichter nachgeschaltet ist. Mittels des Ausgangstrichters kann ein Gegendruck des Abgasstroms eingestellt werden.

Bei einem weiteren Ausführungsbeispiel der Katalysatoranordnung ist vorgesehen, dass mittels des Ausgangstrichters ein Gegendruck so eingestellt ist, dass ein Mischeffekt des Rohrstücks maximiert wird. Vorteilhaft kann mittels des Gegendrucks auch auf die Strömungs-, Druck- und/oder Geschwindigkeitsverhältnisse in dem Rohrstück Einfluss genommen werden. Vorteilhaft kann dies so erfolgen, dass der mittels des Rohrstücks beabsichtigte Mischeffekt optimal wird.

Bei einem weiteren Ausführungsbeispiel der Katalysatoranordnung ist vorgesehen, dass dem zweiten SCR-Katalysator ein NOx-Sensor nachgeschaltet ist. Vorteilhaft kann mittels des NOx-Sensors eine Konvertierungsrate der SCR-Katalysatoren überwacht, gesteuert und/oder geregelt werden.

Bei einem weiteren Ausführungsbeispiel der Katalysatoranordnung ist vorgesehen, dass der NOx-Sensor dem Mischer, insbesondere dem dritten statischen Mischer, nachgeschaltet ist. Vorteilhaft liegt an dem NOx-Sensor eine besonders geringe Abgassträhnigkeit vor, so dass vorteilhaft ein besonders gutes Messergebnis zu erwarten ist.

Bei einem weiteren Ausführungsbeispiel der Katalysatoranordnung ist vorgesehen, dass ein Partikelfilter in den Abgasstrom geschaltet ist. Mittels des Partikelfilters, beispielsweise ausgeführt als Dieselpartikelfilter, können in dem Abgasstrom mitgeführte Partikel, insbesondere Rußpartikel, aus diesem herausgefiltert werden.

Bei einem weiteren Ausführungsbeispiel der Katalysatoranordnung ist vorgesehen, dass der zweite SCR-Katalysator eine NOx- und/oder NH₃-Konvertierungsstufe bildet. Vorteilhaft ist es möglich, den zweiten SCR-Katalysator am Ende der Konvertierungskette der Katalysatoranordnung vorzusehen. Vorteilhaft ist nach dem zweiten SCR-Katalysator beispielsweise kein NH₃-Sperrkatalysator notwendig, da aufgrund der guten Messbarkeit mittels des NOx-Sensors und/oder der guten Konvertierungsrate der SCR-Katalysatoren kein oder lediglich ein hinnehmbarer minimaler NH₃-Schlupf bewirkt werden kann. Auf eine nachgeschaltete katalytische NH₃-Konverlierungsstufe, beispielsweise ein NH₃-Sperrkatalysator kann vorteilhaft verzichtet werden.

Es kann ferner eine Vorrichtung zur Eindosierung eines Mediums in einen in einer Abgasleitung eines Verbrennungsmotors geführten Abgasstrom vorgesehen sein, umfassend einen Funktionsabschnitt der Abgasleitung, mit einem Eingangsbereich for den Abgasstrom, einem stromabwärts anschließenden Eindosierungsbereich mit einer Anbindungsstelle für einen Injektor mit dem das Medium in den Abgasstrom einspritzbar ist und einem stromabwärts anschließenden Ausgangsbereich für den Abgasstrom, wobei die Abgasleitung zwischen Eingangsbereich und Ausgangsbereich eine zentrale Faser mit einer Krümmung aufweist. Dabei ist vorgesehen, dass die Anbindungsstelle in dem Bereich einer Erweiterung der Wandung der Abgasleitung eines In Hauptströmungsrichtung des Abgases gekrümmten Bereichs der Abgasleitung angeordnet ist. Als zentrale Faser eines Abschnitts oder Bereichs der Abgasleitung wird in diesem Text die Linie verstanden, die die zentralen Punkte der Querschnittsflächen des Abschnitts oder Bereichs der Abgasleitung verbindet, wobei als zentraler Punkt einer Querschnittsfläche der Schnittpunkt des maximalen und des minimalen Querschnittsdurchmessers der Querschnittsfläche bezeichnet wird. Ist die Abgasleitung in dem bestimmten Abschnitt oder Bereich von einem Rohr mit einem kreisförmigen Querschnitt gebildet, verläuft die zentrale Faser durch den Kreismittelpunkt der Querschnittsflächen des Rohrs.

Die Anordnung der Anbindungsstelle in der Erweiterung des Strömungsquerschnitts in der Wandung ermöglicht ein einfacheres Temperaturmanagement in diesem Bereich, insbesondere eines dort angeordneten oder anzuordnenden Injektors, da von außerhalb der Abgasleitung auf einfache Weise Temperiermedien an diesen Bereich gebracht werden können. Insbesondere ist eine bessere Kühlung im Fahrtwind eines bewegten Kraftfahrzeugs möglich. Ferner ist die Anbindungsstelle mechanisch geschützt und nicht unmittelbar den Kräften des Abgasstroms ausgesetzt

Bevorzugt ist eine als Auswölbung ausgebildete Erweiterung der Abgasleitung vorgesehen, die in einem in Hauptströmungsrichtung des Abgases (von außen gesehen) konvex gekrümmten Bereich der Abgasleitung angeordnet ist.

In einer Ausgestaltung der Erfindung ist ein Einspritzbereich des Mediums in den Abgasstrom in einem Bereich der Wandung eines in Hauptströmungsrichtung des Abgases gekrümmten Bereich der Abgasleitung angeordnet. Als Einspritzbereich wird ein Bereich des Injektors bezeichnet, in dem eine oder mehrere Auslassöffnungen des Injektors angeordnet sind, beispielsweise eine Spitze einer Injektornadel.

Vorteilhaft kann der Einspritzbereich einen Abstand größer als 2/5DE zur zentralen Faser aufweisen und/oder in der Erweiterung oder der Wandung angeordnet sein, wobei mit DE ein minimaler Querschnittsdurchmesser der Abgasleitung im Eindosierungsbereich bezeichnet wird. Bei diesen Anordnungen des Einspritzbereichs sind die auf den Injektor oder Komponenten des Injektors wirkenden Kräfte reduziert.

In einer anderen Ausgestaltung der Erfindung kann der Einspritzbereich, beispielsweise ein Bereich einer Injektornadel eines Injektors mit einer Auslassöffnung bis in den Bereich des Abgasstroms reichend angeordnet sein.

Bevorzugt ist, dass das Medium mit einem Strahl mit einem Winkelabstand von weniger als 45°, 35°, 30°, 25° oder 15° zur Richtung der zentralen Faser im Ausgangsbereich einspritzbar ist, der Einspritzbereich einen Parallelversatz von weniger als 2/5DA relativ zu einer Stelle aufweist, an der die zentrale Faser der Abgasleitung einen Querschnitt der Abgasleitung im Ausgangsbereich mit einem minimalen Durchmesser DA durchstößt oder der Einspritzbereich mit einem Parallelversatz von weniger als 2/5DA relativ zu einer zentralen Achse der Hauptströmungsrichtung des Abgases im Ausgangsbereich angeordnet ist, wobei DA einen minimalen Querschnittsdurchmesser der Abgasleitung im Ausgangsbereich bezeichnet. Um dies jeweils zu erreichen, wird der Einspritzbereich des Injektors geeignet positioniert.

Mit den genannten Maßnahmen wird erreicht, dass das eingespritzte Medium im Abgasstrom geführt und nicht auf die der Einspritzbereich gegenüber liegende Innenseite der Wandung der Abgasleitung auftrifft. Eine Ablenkung des eingespritzten Mediums durch den Abgasmassenstrom von einer Richtung parallel zur zentralen Faser im Ausgangsbereich oder von einer zentralen Achse der Hauptströmungsrichtung des Abgases im Abgasausgangsbereich wird vermieden.

Bevorzugt ist der Ausgangsbereich als gerader Abschnitt der Abgasleitung ausgebildet, da dies den Anbau weiterer Komponenten vereinfacht.

Vorzugsweise weist die Abgasleitung im Eingangsbereich eine zentrale Faser mit einem gekrümmten Teilbereich auf, womit die Anpassung der Abgasleitung im Bereich des Funktionsabschnitts an den in einem Kraftfahrzeug zur Verfügung stehenden Bauraum einfacher zu gestalten ist.

Bevorzugt hat Abgasleitung im Eingangs- und/oder Ausgangsbereich einen konstanten, vorzugsweise kreisförmigen Strömungsquerschnitt.

Gemäß einem weiteren Aspekt der Erfindung weist die Abgasleitung zwischen Eingangsbereich und Ausgangsbereich eine zentrale Faser mit einem S-schlagförmigen Verlauf auf wodurch die Führung des Abgasstroms der Abgasleitung verbessert und eine Anlegung des Abgasstroms an die Innenwandung vermieden wird.

Vorteilhaft weist zwischen Eingangsbereich und Ausgangsbereich die Krümmung der zentralen Faser zumindest ein Maximum bzw. der Krümmungsradius der Krümmung der zentralen Faser zumindest ein Minimum auf.

Es ist zwecksmäßig, wenn an der Anbindungsstelle ein Injektor zum Einspritzen des Mediums in den Abgasstrom angeordnet ist.

Vorzugsweise ist die Anbindungsstelle als Stutzen ausgebildet. Vorzugsweise ist ein gekrümmter Verbindungsbereich der Anbindungsstelle mit der Wandung der Abgasleitung vorgesehen, der eine zur Krümmung der zentralen Faser im Eindosierungsbereich entgegen gesetzte Krümmung aufweist.

Zur Verbesserung der Befestigung des Injektors kann der Stutzen als Haltestutzen ausgebildet sein. Im Bereich des Stutzens kann die Wandung der Abgasleitung von außen gesehen eine konvexe Wölbung aufweisen, um den Strömungswiderstand für das Abgas in diesem Bereich der Abgasleitung nicht zu erhöhen.

Der Injektor weist in vorteilhafter Weise zumindest einen Auslass zur Erzeugung eines Strahlkegels auf, um die Durchmischung des Abgasstroms mit dem eingespritzten Medium zu verbessern.

Zur weiteren Verbesserung der Durchmischung des Abgasstroms mit dem eingespritzten Medium ist stromabwärts des Ausgangsbereichs zumindest ein auf den Abgasstrom wirkender Mischer vorgesehen. Der Mischer kann statisch oder dynamisch ausgebildet sein.

Vorzugsweise ist der Mischer als Plattenmischer mit zumindest einer Pralloberfläche ausgebildet. An der oder den Pralloberflächen erfolgt eine Zerstäubung des eingespritzten Mediums, sodass eine Beaufschlagung von hinter dem Plattenmischer gegebenenfalls angeordneten weiteren Komponenten mit größeren Tröpfchen des Mediums vermieden werden kann.

Ferner ist es vorteilhaft, wenn der Injektor Auslässe aufweist, die bei gegebenen Abstand zwischen dem Injektor und dem Plattenmischer derart ausgerichtet sind, dass mehr als 80 % der Menge des eingespritzten Mediums auf die Pralloberflächen des Plattenmischers auftrifft oder auftreffen kann, sodass eine möglichst vollständige Zerstäubung des eingespritzten Mediums erfolgt.

Ferner ist es vorteilhaft, wenn der Injektor Auslässe aufweist, die bei gegebenen Abstand zwischen dem Injektor und dem Plattenmischer derart ausgerichtet sind, dass zumindest 30 % der Pralloberflächen des Plattenmischers mit symmetrisch zur zentralen Faser der Abgasleitung und/oder zur Hauptströmungsrichtung des Abgases in der Abgasleitung mit dem Medium beaufschlagbar sind. Mit einer derartigen symmetrischen Beaufschlagung des Plattenmischers kann eine entsprechende Beaufschlagung von stromabwärts des Mischers angeordneten Komponenten mit zerstäubten Medium erreicht werden.

Es ist zweckmäßig, wenn der Injektor zumindest eine äußere Kühlrippe aufweist, da dies eine einfache Kühlung im Fahrwind eines bewegten Kraftfahrzeugs erlaubt.

Ferner ist es vorteilhaft, wenn stromaufwärts des Eingangsbereichs der Vorrichtung zur Eindosierung zumindest ein Dieseloxidationskatalysator und/oder zumindest ein vorzugsweise beschichteter Dieselpartikelfilter angeordnet ist, da bei einer derartigen Anordnung eine katalytische Oxidation des Reduktionsmittels im Dieseloxidationskatalysator beziehungsweise Dieselpartikelfilter vermieden wird.

Gemäß weiteren Aspekten der Erfindung, wird die Aufgabe mit einem Kraftfahrzeug mit einer erfindungsgemäßen Vorrichtung zur Eindosierung eines Mediums sowie mit einer erfingungsgemäßen Katalysatoranordnung gelöst.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen. Es zeigen:
- Fig. 1: eine Katalysatoranordnung zur Reinigung eines Abgasstroms eines Verbrennungsmotors eines Kraftfahrzeuges mit einem ersten SCR-Katalysator und einem zweiten SCR-Katalysator sowie einem diesen nachgeschalteten NOx-Sensor;
- Fig. 2: einen mit der in Fig. 1 gezeigten Katalysatoranordnung kombinierbaren Plattenmischer;
- Fig. 3: zwei Schaubilder jeweils einer NH₃-Gleichverteilung eines Abgasstroms einer Katalysatoranordnung des Standes der Technik und der in Fig. 1 gezeigten Katalysatoranordnung;
- Fig. 4: eine dreidimensionale Untenansicht eines Unterbodens eines Kraftfahrzeuges zusammen mit der in Fig. 1 gezeigten Katalysatoranordnung;
- Fig. 5-8: einen Abschnitt einer Abgasanlage mit einer Abgasleitung mit S-Schlag in Schnittdarstellungen:

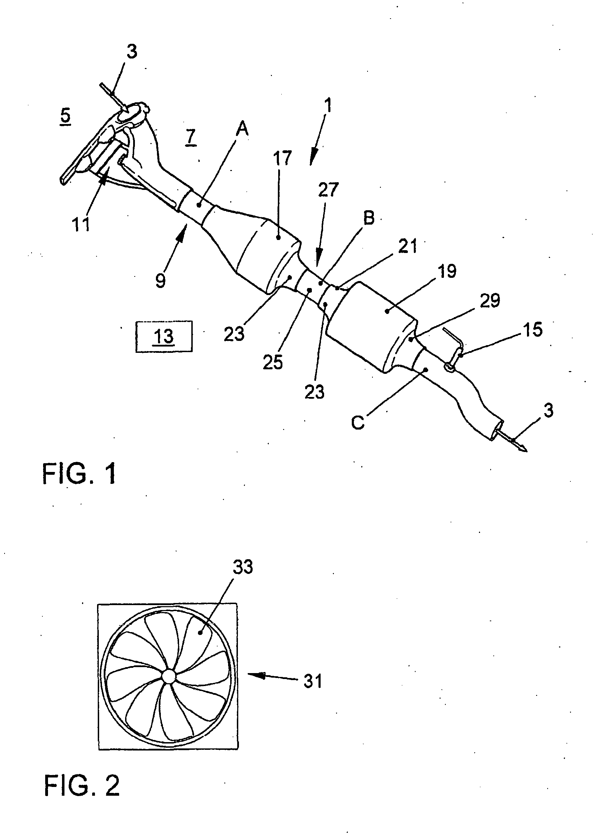

Fig. 1 zeigt eine Katalysatoranordnung 1 zur Reinigung eines Abgasstroms 3 eines mittels des Bezugszeichens 5 lediglich angedeuteten Verbrennungsmotors eines mittels des Bezugszeichens 7 angedeuteten Kraftfahrzeuges. Die Katalysatoranordnung 1 ist Teil einer Abgasanlage 9 des Kraftfahrzeuges 7. Die Abgasanlage 9 weist eine nur teilweise dargestellte Dosiervorrichtung 11 zum Eindosieren eines Reduktionsmittels in den Abgasstrom 3 auf. Bei dem nicht näher dargestellten Reduktionsmittel kann es sich beispielsweise um Ammoniak handeln, der insbesondere in Form einer wässrigen Harnstofflösung mittels der Dosiervorrichtung 11 dem Abgasstrom 3 zudosierbar ist. Zur Steuerung und/oder Regelung einer Zusammensetzung des Abgasstroms 3, insbesondere bezüglich des Reduktionsmittels, kann eine Steuereinheit 13 vorgesehen sein. Die Steuereinheit 13 kann auf eine Gemischbildung des Verbrennungsmotors 3 und/oder die Dosiervorrichtung 11 Einfluss nehmen.

Insbesondere zur Realisierung eines geschlossenen Regelkreises kann die Steuereinheit 13 einem Messglied, einem NOx-Sensor 15 der Abgasanlage 9 zugeordnet sein. Die Katalysatoranordnung 1 der Abgasanlage 9 weist einen ersten SCR-Katalysator 17 und diesem nachgeschaltet einen zweiten SCR-Katalysator 19 auf. Zwischen die SCR-Katalysatoren 17 und 19 ist ein Rohrstück 21 geschaltet, das zwei Aufweitungen 23 und zwischen diese geschaltet eine Einschnürung 25 aufweist, die zusammen eine Venturi-Düse 27 bilden. Der Abgasstrom 3 wird durch die Venturi-Düse 27 hindurchgeführt, was einen positiven Einfluss auf eine Durchmischung und Strähnigkeit des Abgasstroms 3 bewirkt.

Dem zweiten SCR-Katalysator 19 ist ein Ausgangstrichter 29 nachgeschaltet, der den Querschnitt des Abgasstroms 3 in Strömungsrichtung hin verjüngt. Mittels des Auslasstrichters 29 kann ein Gegendruck des Abgasstroms 3 eingestellt werden. Vorteilhaft kann der Auslasstrichter 29 so dimensioniert sein, dass sich in dem Rohrstück 21 bzw. in der Venturi-Düse 27 des Rohrstücks 21 für eine Durchmischung des Abgasstroms 3 optimale Strömungs- und/oder Druckverhältnisse einstellen.

Fig. 2 zeigt einen Plattenmischer 31 mit schräg angestellten radial nach außen gerichteten Platten 33. Mittels der Platten 33 kann ein Drall in den Abgasstrom 3 der Abgasanlage 9 eingebracht werden; was zu einer besseren Durchmischung des Abgasstroms 3 führt. Die Platten können dazu relativ zur Strömungsrichtung des Abgasstroms 3 geneigt ausgeführt sein, beispielsweise analog Propeller- oder Turbinenschaufeln. Der Plattenmischer 31 wirkt als statischer Mischer. Alternativ und/oder zusätzlich ist es denkbar, einen dynamischen Mischer vorzusehen, beispielsweise die Platten 33 des Plattenmischers 31 drehbar innerhalb des Abgasstroms 3 zu lagern, wobei eine Antriebsenergie mittels im Abgasstrom 3 vorhandener kinetischer und/oder thermischer beziehungsweise Druckenergie bereitgestellt werden kann.

Der in Fig. 2 gezeigte Plattenmischer 31 kann mit der in Fig. 1 gezeigten Katalysatoranordnung kombiniert werden. Dazu kann der Plattenmischer 31 an einer mit A, B und/oder C gekennzeichneten Position/en an der Abgasanlage 9 wie in Fig. 1 dargestellt angeordnet werden. Der Plattenmischer 31 oder ein beliebiger anderer Mischer, beispielsweise ein dynamischer Mischer und/oder ein Drallelement können also dem ersten SCR-Katalysator vorgeschaltet und/oder dem zweiten SCR-Katalysator 19 vorgeschaltet und/oder dem NOx-Sensor 15 vorgeschaltet angeordnet werden. Gemäß der in Fig. 1 mit B gekennzeichneten Position kann der Plattenmischer 31 an einer Querschnitts-minimalen Stelle bzw. an der Einschnürung 25 der Venturi-Düse 27 des Rohrstücks 21 angeordnet werden.

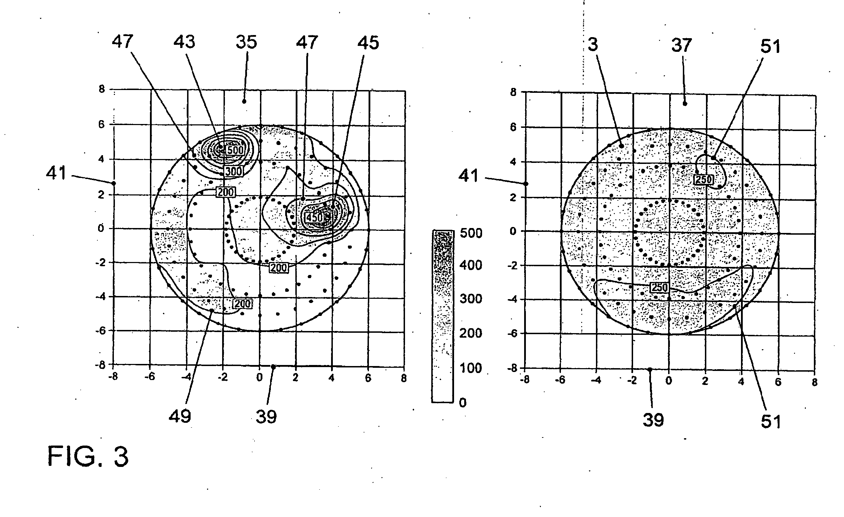

Fig. 3 zeigt eine Gegenüberstellung einer NH₃-Gleichverteilung eines Abgasstroms einer Katalysatoranordnung gemäß Stand der Technik sowie einer NH₃-Gleichverteilung der Katalysatoranordnung 1. Links stellt Fig. 3 mittels eines ersten Schaubildes 35 die NH₃-Gleichverteilung gemäß Stand der Technik dar. Dabei kann es sich um eine NH₃-Gleichverteilung handeln, wie sie sich beispielsweise bei einem üblichen SCR-Katalysator mit einer Länge von 6 Zoll ergeben würde. Mittels eines zweiten Schaubildes 37, in Fig. 3 rechts angeordnet, wird eine NH₃-Gleichverteilung dargestellt, wie sie sich bei der Katalysatoranordnung 1 gemäß Fig. 1 ergibt. Die in Fig. 3 gezeigten NH₃-Gleichverteilungen zeigen jeweils einen Querschnitt des Abgasstroms 3. X-Achsen 39 der Schaubilder 35, 37 sowie Y-Achsen 41 symbolisieren jeweils eine Strecke in Zentimetern, beispielsweise pro dargestelltem Quadrat eines über die Querschnitte gelegten Gitters 1 cm. Mittels Gleichverteilungslinien sind unterschiedliche NH₃-Verteilungen, insbesondere NH₃-Strähnigkeiten der verglichenen Abgasströme dargestellt. Im ersten Schaubild 35 gemäß Stand der Technik sind deutlich zwei NH₃-Strähnen mit einer sehr hohen NH₃-Konzentration, beispielsweise von über 400 ppm zu erkennen. Im ersten Schaubild 35 oben links ist mittels einer ersten Gleichverteilungslinie 43 eine NH₃-Strähne mit einer Konzentration von über 500 ppm dargestellt. Etwas weiter rechts unten ist mittels einer zweiten Gleichverteilungslinie 45 eine NH₃-Strähne von über 450 ppm dargestellt. Mittels einer dritten Gleichverteilungslinie 47 sind NH₃-Konzentrationen von 300 ppm symbolisiert. Ferner ist im ersten Schaubild 35 noch eine vierte Gleichverteilungslinie 49 eingezeichnet, die eine NH₃-Konzentration von 200 ppm symbolisiert.

Im Vergleich dazu ist im zweiten Schaubild 37 zu erkennen, dass sich eine wesentlich homogenere Verteilung von NH₃ ergibt. Zu erkennen ist eine fünfte Gleichverteilungslinie 51, die eine NH₃-Konzentration von 200 ppm symbolisiert. Es ist zu erkennen, dass über den gesamten im zweiten Schaubild 37 dargestellten Querschnitt des Abgasstroms 3 eine NH₃-Gleichverteilung von etwas über 250 ppm bzw. etwas unterhalb von 250 ppm herrscht. Vorteilhaft kann bei einer solch guten NH₃-Gleichverteilung der nachgeschaltete NOx-Sensor 15 eine NOx-Konzentration des Abgasstroms 3 besonders gut messen. Ferner ist eine besonders gute Umsetzung von Stickoxiden mittels der SCR-Katalysatoren 17, 19 möglich.

Der erste SCR-Katalysator 17 kann beispielsweise kleiner ausgelegt sein als der zweite SCR-Katalysator 19. Beispielsweise kann der erste SCR-Katalysator 17 drei Zoll lang und der zweite SCR-Katalysator 19 sechs Zoll lang sein.

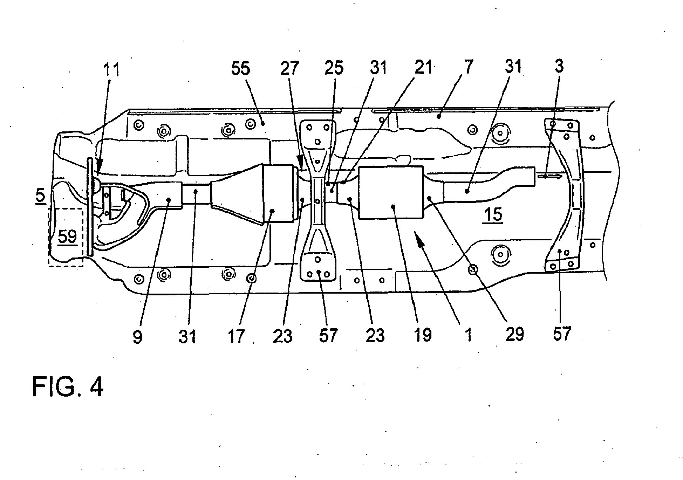

Fig. 4 zeigt einen Unterboden 55 des Kraftfahrzeuges 7 zusammen mit der in Fig. 1 gezeigten Katalysatoranordnung 1 der Abgasanlage 9. Die Abgasanlage 9 ist mittels Haltern 57 dem Unterboden 55 des Kraftfahrzeuges 7 zuordenbar. Beispielhaft ist die in Fig. 4 gezeigte Abgasanlage 9 mit insgesamt drei Plattenmischern 31 ausgestattet. Außerdem ist es denkbar, zusätzlich einen Partikelfilter 59 vorzusehen, der in Figur 4 gestichelt angedeutet ist.

Vorteilhaft können mittels der Katalysatoranordnung 1 besser strenge NOx-Grenzwerte, insbesondere von Dieselmotoren, eingehalten werden.

Vorteilhaft kann für eine möglichst hohe NOx-Konvertierungsrate eine besonders gute Verdampfung und eine besonders gute Vermischung des eindosierten Reduktionsmittels, insbesondere der wässrigen Harnstofflösung (HWL), in den Abgasstrom 3 erzielt werden, so dass die SCR-Katalysatoren 17, 19 vorteilhaft besonders gleichmäßig mit NH₃ beaufschlagbar sind. Vorteilhaft kann neben einer guten Konvertierung auch eine Abgassträhnigkeit hinter den SCR-Katalysatoren 17, 19, beispielsweise stromaufwärts des NOx-Sensors 15 minimiert werden, wobei der NOx-Sensor 15 aus einer repräsentativen Abgasmischung des Abgasstroms 3 NOx- oder NH₃-Durchbrüche besonders gut erkennen kann. Vorteilhaft können mittels dieser Durchbruchsignale des NOx-Sensors 15 wesentliche Adaptions- und/oder OBD-Funktionen durchgeführt werden.

Vorteilhaft können der erste SCR-Katalysator 17 und der zweite SCR-Katalysator 19 eine vergrößerte katalytische Oberfläche bereitstellen und als zwei Einzelkatalysatoren beispielsweise in zwei separaten Cannings untergebracht werden. Das verbindende Rohrstück 21 und entsprechende Trichtergeometrien bzw. die Aufweitungen 23 sowie die Einschnürung 25 der Abgasströmung bzw. des Abgasstroms 3 der Abgasanlage 9 können vorteilhaft eine verbesserte NH₃-Gleichverteilung, wie im zweiten Schaubild 37 der Fig. 3 gezeigt, bewirken.

In das Rohrstück 21 kann optional ein weiteres Mischelement oder Drallelement, beispielsweise der Plattenmischer 31, eingesetzt werden, um eine noch bessere Durchmischung zu ermöglichen.

Ferner kann das Rohrstück 21 optional als LSI-Technik (Liquid Silicon Infiltration) ausgeführt werden, um Temperaturverluste zu vermeiden bzw. zumindest zu minimieren.

Der Ausgangstrichter bzw. Auslasstrichter 29 des zweiten SCR-Katalysators 19 ist so ausgeführt, dass über den Gegendruck der Mischeffekt im Zwischenrohr bzw. dem Rohrstück 21 optimal ist.

Hinter dem zweiten SCR-Katalysator 19 kann ein weiteres Mischelement, beispielsweise ebenfalls der Plattenmischer 31, eingesetzt werden, um eventuell noch vorhandene NH₃-Strähnen zu vermeiden, die eine Fehlmessung des NOx-Sensors 15 zur Folge hätten.

Vorteilhaft kann mittels der ersten Katalysatoranordnung 1 bzw. der Konfiguration der Abgasanlage 9 ein NH₃-Sperrkatalysator, beispielsweise dem zweiten Katalysator 19 nachgeschaltet, entfallen.

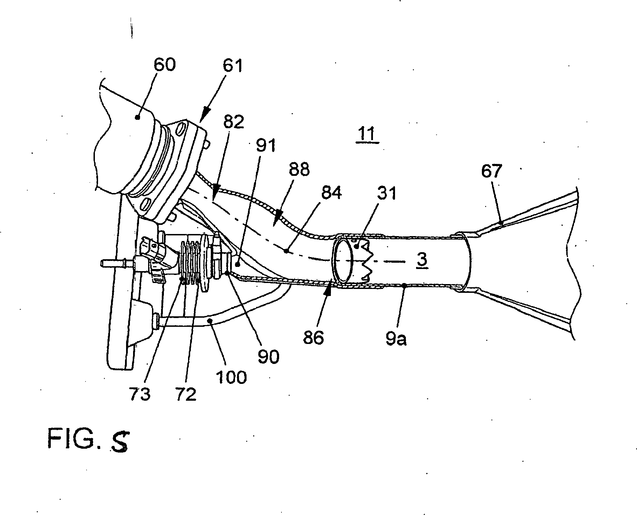

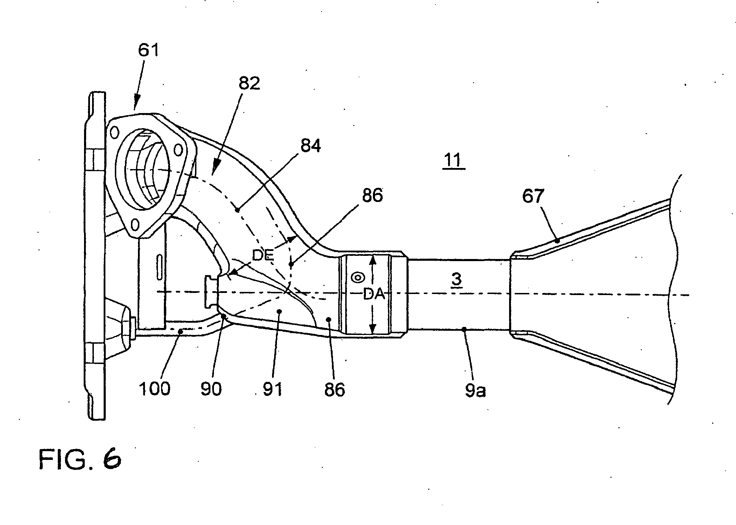

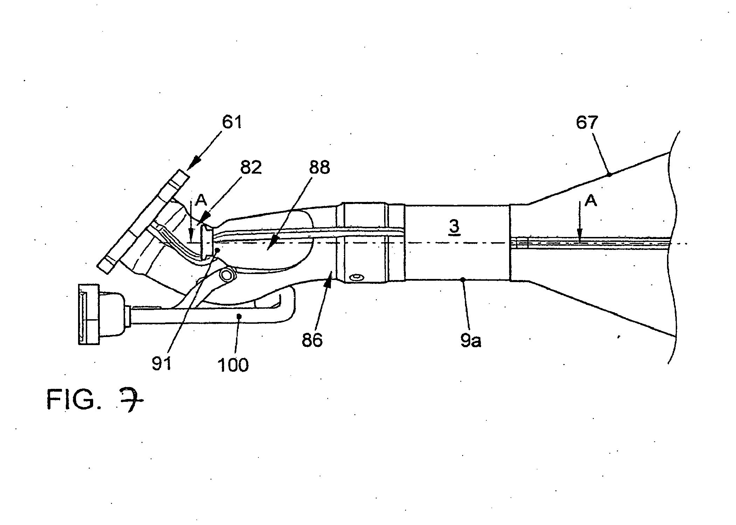

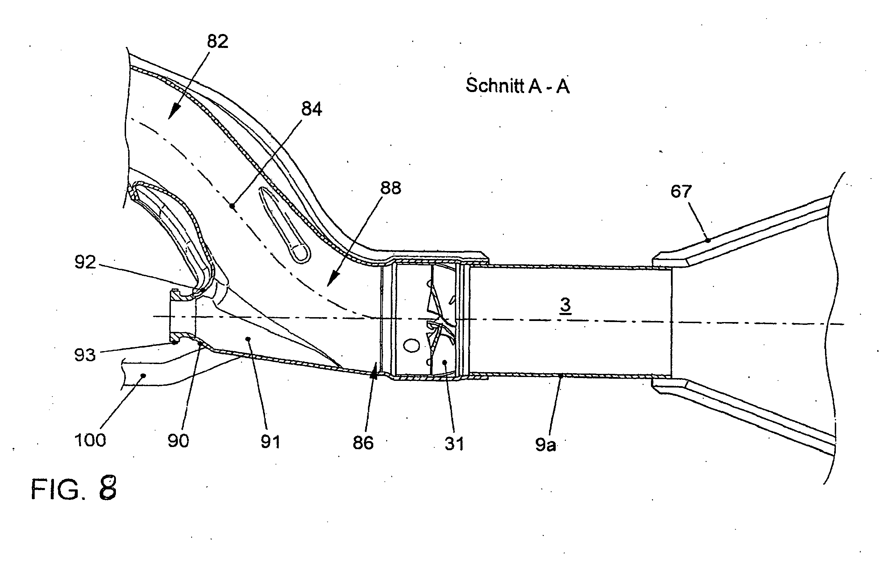

Fig. 5 bis 8 zeigen in verschiedenen Ansichten eine Dosiervorrichtung 11, welche einen Funktionsabschnitt der Abgasleitung umfasst und einen Eingangsbereich 82, einen stromabwärts an den Eingangsbereich 82 sich anschließenden Eindosierungsbereich 88 und einen stromabwärts sich an den Eindosierungsbereich 88 anschließenden Ausgangsbereich 86 für des Abgasstrom 3 aufweist. Der Eindosierungsbereich 88 weist eine Anbindungsstelle 90 für einen Injektor 72 auf, mit dem das Medium in den Abgasstrom 3 einspritzbar ist. Der Injektor 72 umfasst einen nicht dargestellten Einspritzbereich mit zumindest einem Auslass für das Medium sowie Kühlrippen 73 für eine Luftkühlung.

Stromaufwärts des Eingangsbereichs 82 ist ein Package 60 mit einem Dieseloxidationskatalysator und einem Dieselpartikelpartikeifilter mittels eines Verbindungselements 61 angeordnet. Stromabwärts des Ausgangsbereichs 86 ist ein Mischer 31 angeordnet, auf den weiter unten genauer eingegangen wird. Die Abgasleitung 9a wird im Bereich des Funktionsabschnitts durch eine Halterung 100 gehaltert.

Zwischen Eingangsbereich 82 und Ausgangsbereich 86 weist die Abgasleitung 9a eine zentrale Faser 84 mit einer Krümmung auf. Im Eingangsbereich 82 sowie im Ausgangsbereich 86 ist die zentrale Faser 84 nur relativ wenig gekrümmt. In dem Bereich zwischen Eingangsbereich 82 und Ausgangsbereich 86 vergrößert sich die Krümmung der zentralen Faser 84, die Abgasleitung 9a ist in diesem Bereich stärker gekrümmt. Der Krümmungsradius der Krümmung nimmt daher zwischen Eingangsbereich 82 und Ausgangsbereich 86 zumindest ein Minimum an.

Die zentrale Faser 84 der Abgasleitung in den Fig. 5 bis 8 hat zwischen Eingangsbereich 82 und Ausgangsbereich 86 einen S-schlagförmigen Verlauf, wobei es sich versteht, dass auch andere Ausführungsformen mit eine Abgasleitung 9a mit einer einfachen Krümmung (mit nur einem Minimum des Krümmungsradius) zwischen Eingangsbereich 82 und Ausgangsbereich 86 von der Erfindung umfasst sind.

Erfindungsgemäß ist die Anbindungsstelle 90 in dem Bereich 91 einer Erweiterung des Strömungsquerschnitts der Abgasleitung 9a in der Wandung der Abgasleitung 9a angeordnet.

Wie dargestellt ist, ist die Anbindungsstelle 90 als Stutzen ausgebildet mit einem gekrümmten Verbindungsbereich 92 der Anbindungsstelle 90 mit der Wandung der Abgasleitung 9a zumindest in einem Bereich stromaufwärts der Anbindungsstelle 90. Der Verbindungsbereich 92 hat eine zur Krümmung der zentralen Faser 84 im Eindosierungsbereich 88 entgegen gesetzte Krümmung. Der Stutzen ist als Haltestutzen mit einem endständigen Haltebereich 93 zur Befestigung eines Injektors ausgebildet.

Erfindungsgemäß ist weiter vorgesehen, dass das Medium mit einem Strahl mit einem Winkelabstand von weniger als 45°C zur Richtung der zentralen Faser im Ausgangsbereich 86 einspritzbar ist. Hierzu ist der Einspritzbereich geeignet positioniert. Ferner kann vorgesehen sein, dass der Einspritzbereich einen Parallelversatz von weniger als 2/5A D relativ zu einer Stelle aufweist, an die zentrale Faser der Abgasleitung den Querschnitt der Abgasleitungen im Ausgangsbereich 86 durchstößt, wobei die Abgasleitung im Ausgangsbereich 86 einen minimalen Durchmesser DAaufweist. Ferner kann der Einspritzbereich mit einem Parallelversatz von weniger als 2,5 DA relativ zu einer zentralen Achse der Hauptströmungsrichtung des Abgases im Ausgangsbereich angeordnet sein. Mit dieser Positionierung der Einspritzbereich wird erreicht, dass die Ablenkung des eingespritzten Mediums von der Richtung des Einspritzstrahls zur Wandung der Abgasleitung 9a gering ist. Ferner wird eine Anlegung der Abgasströmung an die Wandung vermieden.

## Patentansprüche

1. Katalysatoranordnung (1) zur Reinigung eines Abgasstroms (3) eines Verbrennungsmotors (5) eines Kraftfahrzeuges (7) mittels einer katalytischen Reduktion, mit:
- einem ersten SCR-Katalysator (17) zum Durchführen der selektiven katalytischen Reduktion,
- einem dem ersten SCR-Katalysator (17) nachgeschalteten zweiten SCR-Katalysator (19) zum Durchführen der selektiven katalytischen Reduktion,
- einem zwischen die SCR-Katalysatoren (17,19) geschalteten Rohrstück (21) zum Leiten des Abgasstroms (3) von dem ersten SCR-Katalysator (17) in den zweiten SCR-Katalysator (19),
**dadurch gekennzeichnet, daß** das Rohrstück (21) eine Einschnürung (25) zwischen zwei Aufweitungen (23) aufweist, und ein dem zweiten SCR-Katalysator (19) vorgeschalteter zweiter statischer Mischer an der Einschnürung (25) das Rohrstücks (21) angeordnet ist.

2. Katalysatoranordnung nach Anspruch 1, wobei die Einschnürung (25) des Rohrstücks (21) eine Venturi-Düse (27) aufweist und der zweite statische Mischer an einer Querschnitt-minimalen Position der Venturi-Düse (27) angeordnet ist.

3. Katalysatoranordnung nach Anspruch 1, **dadurch gekennzeichnet, dass** der erste SCR-Katalysator (17) kleiner ausgelegt ist als der zweite SCR-Katalysator (19).

4. Katalysatoranordnung nach einem der vorhergehenden Ansprüche, **dadurch gekennzeichnet, dass** zumindest einer der folgenden auf den Abgasstrom (3) wirkenden Mischer vorgesehen ist:
- ein dem ersten SCR-Katalysator (17) vorgeschalteter erster statischer Mischer,
- ein dem zweiten SCR-Katalysator (19) nachgeschalteter dritter statischer Mischer,
- ein dynamischer Mischer,
- ein Drallelement,
- ein Plattenmischer (31).

5. Katalysatoranordnung nach einem der vorhergehenden Ansprüche mit einer Vorrichtung zur Eindosierung eines Mediums in einen in einer Abgasleitung eines Verbrennungsmotors geführten Abgasstrom, umfassend einen Funktionsabschnitt der Abgasleitung, mit
einem Eingangsbereich für den Abgasstrom,
einem stromabwärts anschließenden Eindosierungsbereich mit einer Anbindungsstelle für einen Injektor, mit dem das Medium in den Abgasstrom einspritzbar ist, und
einem stromabwärts anschließenden Ausgangsbereich für den Abgasstrom,
wobei die Abgasleitung zwischen Eingangsbereich und Ausgangsbereich eine zentrale Faser mit einer Krümmung aufweist,
wobei die Anbindungsstelle in dem Bereich einer Erweiterung des Strömungsquerschnitts der Abgasleitung in der Wandung der Abgasleitung eines in Hauptströmungsrichtung des Abgases gekrümmten Bereichs der Abgasleitung angeordnet ist.

6. Katalysatoranordnung nach Anspruch 5, **dadurch gekennzeichnet, dass** zumindest ein Einspritzbereich eines Injektors in einem Bereich der Wandung eines in Hauptströmungsrichtung des Abgases gekrümmten Bereichs der Abgasleitung angeordnet ist oder anordenbar ist und/oder einen Abstand größer als 2/5DE zur zentralen Faser aufweist, wobei DE ein minimaler Querschnittsdurchmesser der Abgasleitung an der Einspritzbereich bezeichnet.

7. Katalysatoranordnung nach Anspruch 5 oder 6, **dadurch gekennzeichnet, dass** das Medium mit einem Strahl mit einem Winkelabstand von weniger als 45° zur Richtung der zentralen Faser im Ausgangsbereich einspritzbar ist,
ein Einspritzbereich eines Injektors einen Parallelversatz von weniger als 2/5DA relativ zu einer Stelle aufweist, an der die zentrale Faser der Abgasleitung einen Strömungsquerschnitt der Abgasleitung im Ausgangsbereich mit einem minimalen Durchmesser DA durchstößt oder
ein Einspritzbereich mit einem Parallelversatz von weniger als 2/5DA relativ zu einer zentralen Achse der Hauptströmungsrichtung des Abgases im Ausgangsbereich angeordnet ist, wobei DA einen minimalen Querschnittsdurchmesser der Abgasleitung bezeichnet.

8. Katalysatoranordnung nach einem der Ansprüche 5 bis 7, **dadurch gekennzeichnet, dass** die Abgasleitung zwischen Eingangsbereich und Ausgangsbereich eine zentrale Faser mit einem S-Schlagförmigen Verlauf aufweist.

9. Katalysatoranordnung nach einem der Ansprüche 5 bis 8, **dadurch gekennzeichnet, dass** an der Anbindungsstelle ein Injektor zum Einspritzen des Mediums in den Abgasstrom angeordnet oder anordenbar ist.

10. Katalysatoranordnung nach Anspruch 9, **dadurch gekennzeichnet, dass** die Anbindungsstelle als Haltestutzen ausgebildet ist.

11. Kraftfahrzeug (7) mit einer Katalysatoranordnung (1) nach einem der vorhergehenden Ansprüche.

## Claims

1. Catalytic converter arrangement (1) for the purification of an exhaust-gas stream (3) from an internal combustion engine (5) of a motor vehicle (7) by means of catalytic reduction, having:
- a first SCR catalytic converter (17) for performing selective catalytic reduction,
- a second SCR catalytic converter (19), which is positioned downstream of the first SCR catalytic converter (17), for performing selective catalytic reduction,
- a pipe piece (21) which is positioned between the SCR catalytic converters (17, 19) and which serves for conducting the exhaust-gas stream (3) from the first SCR catalytic converter (17) into the second SCR catalytic converter (19),
**characterized in that** the pipe piece (21) has a constriction (25) between two flared portions (23), and a second static mixer which is positioned upstream of the second SCR catalytic converter (19) is arranged at the constriction (25) of the pipe piece (21).

2. Catalytic converter arrangement according to Claim 1, wherein the constriction (25) of the pipe piece (21) has a Venturi nozzle (27), and the second static mixer is arranged at a position of minimum cross section of the Venturi nozzle (27).

3. Catalytic converter arrangement according to Claim 1, **characterized in that** the first SCR catalytic converter (17) is designed to be smaller than the second SCR catalytic converter (19).

4. Catalytic converter arrangement according to one of the preceding claims, **characterized in that** at least one of the following mixers, which acts on the exhaust-gas stream (3), is provided:
- a first static mixer positioned upstream of the first SCR catalytic converter (17),
- a third static mixer positioned downstream of the second SCR catalytic converter (19),
- a dynamic mixer,
- a swirl element,
- a plate-type mixer (31).

5. Catalytic converter arrangement according to one of the preceding claims, having a device for the injection of a medium into an exhaust-gas stream that is conducted in an exhaust line of an internal combustion engine, comprising a functional section of the exhaust line with
an inlet region for the exhaust-gas stream,
an injection region which follows downstream and which has an attachment point for an injector by means of which the medium can be injected into the exhaust-gas stream, and
an outlet region, which follows downstream, for the exhaust-gas stream,
wherein the exhaust line has, between the inlet region and outlet region, a centre line with a curvature,
wherein the attachment point is arranged, in the region of a flared portion of the flow cross section of the exhaust line, in the wall of the exhaust line of an exhaust line region which is curved in the main flow direction of the exhaust gas.

6. Catalytic converter arrangement according to Claim 5, **characterized in that** at least one injection region of an injector is or can be arranged in a region of the wall of an exhaust line region which is curved in the main flow direction of the exhaust gas, and/or said at least one injection region is at a distance of greater than 2/5DE from the centre line, wherein DE denotes a minimum cross-sectional diameter of the exhaust line at the injection region.

7. Catalytic converter arrangement according to Claim 5 or 6, **characterized in that**
the medium can be injected in a jet at an angle of less than 45° with respect to the direction of the centre line in the outlet region,
an injection region of an injector has a parallel offset of less than 2/5DA relative to a point at which the centre line of the exhaust line passes through a flow cross section of the exhaust line in the outlet region with a minimum diameter DA, or
an injection region is arranged with a parallel offset of less than 2/5DA relative to a central axis of the main flow direction of the exhaust gas in the outlet region, wherein DA denotes a minimum cross-sectional diameter of the exhaust line.

8. Catalytic converter arrangement according to one of Claims 5 to 7, **characterized in that** the exhaust line has, between the inlet region and outlet region, a centre line with an S-shaped profile.

9. Catalytic converter arrangement according to one of Claims 5 to 8, **characterized in that** an injector for injecting the medium into the exhaust-gas stream is or can be arranged at the attachment point.

10. Catalytic converter arrangement according to Claim 9, **characterized in that** the attachment point is in the form of a holding connector.

11. Motor vehicle (7) having a catalytic converter arrangement (1) according to one of the preceding claims.

## Revendications

1. Agencement de catalyseur (1) pour le nettoyage d'un flux de gaz d'échappement (3) d'un moteur à combustion interne (5) d'un véhicule automobile (7) au moyen d'une réduction catalytique, comprenant :
- un premier catalyseur SCR (17) pour réaliser la réduction catalytique sélective,
- un deuxième catalyseur SCR (19) monté en aval du premier catalyseur SCR (17) pour réaliser la réduction catalytique sélective,
- un élément tubulaire (21) monté entre les catalyseurs SCR (17, 19) pour conduire le flux de gaz d'échappement (3) depuis le premier catalyseur SCR (17) dans le deuxième catalyseur SCR (19),
**caractérisé en ce que** l'élément tubulaire (21) présente un rétrécissement (25) entre deux élargissements (23), et un deuxième mélangeur statique monté en amont du deuxième catalyseur SCR (19) est disposé au niveau du rétrécissement (25) de l'élément tubulaire (21).

2. Agencement de catalyseur selon la revendication 1, le rétrécissement (25) de l'élément tubulaire (21) présentant une buse de venturi (27) et le deuxième mélangeur statique étant disposé au niveau d'une position de section transversale minimale de la buse de venturi (27).

3. Agencement de catalyseur selon la revendication 1, **caractérisé en ce que** le premier catalyseur SCR (17) est conçu de manière à être plus petit que le deuxième catalyseur SCR (19).

4. Agencement de catalyseur selon l'une quelconque des revendications précédentes, **caractérisé en ce qu'**au moins l'un des mélangeurs suivants agissant sur le flux de gaz d'échappement (3) est prévu :
- un premier mélangeur statique monté en amont du premier catalyseur SCR (17),
- un troisième mélangeur statique monté en aval du deuxième catalyseur SCR (19),
- un mélangeur dynamique,
- un élément tourbillonnant,
- un mélangeur à plaque (31).

5. Agencement de catalyseur selon l'une quelconque des revendications précédentes, comprenant un dispositif pour le dosage d'un milieu dans un flux de gaz d'échappement guidé dans une conduite de gaz d'échappement d'un moteur à combustion interne, comprenant une section fonctionnelle de la conduite de gaz d'échappement comprenant une région d'entrée pour le flux de gaz d'échappement,
une région de dosage se raccordant en aval, avec un point de liaison pour un injecteur, avec lequel le milieu peut être injecté dans le flux de gaz d'échappement, et
une région de sortie pour le flux de gaz d'échappement se raccordant en aval,
la conduite de gaz d'échappement présentant entre la région d'entrée et la région de sortie un biseau central avec une courbure,
le point de liaison étant disposé dans la région d'un élargissement de la section transversale d'écoulement de la conduite de gaz d'échappement dans la paroi de la conduite de gaz d'échappement d'une région de la conduite de gaz d'échappement courbée dans la direction d'écoulement principal du gaz d'échappement.

6. Agencement de catalyseur selon la revendication 5, **caractérisé en ce qu'**au moins une région d'injection d'un injecteur est disposée ou peut être disposée dans une région de la paroi d'une région de la conduite de gaz d'échappement courbée dans la direction d'écoulement principal du gaz d'échappement, et/ou présente une distance supérieure à 2/5DE par rapport au biseau central, DE désignant un diamètre de section transversale minimal de la conduite de gaz d'échappement au niveau de la région d'injection.

7. Agencement de catalyseur selon la revendication 5 ou 6, **caractérisé en ce que** le milieu peut être injecté avec un jet ayant une distance angulaire inférieure à 45° par rapport à la direction du biseau central dans la région de sortie,
une région d'injection d'un injecteur présente un décalage parallèle de moins de 2/5DA par rapport à un point au niveau duquel le biseau central de la conduite de gaz d'échappement perce une section transversale d'écoulement de la conduite de gaz d'échappement dans la région de sortie avec un diamètre minimal DA ou
une région d'injection est disposée avec un décalage parallèle inférieur à 2/5DA par rapport à un axe central de la direction d'écoulement principal du gaz d'échappement dans la région de sortie, DA désignant un diamètre de section transversale minimal de la conduite de gaz d'échappement.

8. Agencement de catalyseur selon l'une quelconque des revendications 5 à 7, **caractérisé en ce que** la conduite de gaz d'échappement entre la région d'entrée et la région de sortie présente un biseau central avec une étendue en forme de profil en S.

9. Agencement de catalyseur selon l'une quelconque des revendications 5 à 8, **caractérisé en ce qu'**au niveau du point de liaison est ou peut être disposé un injecteur pour l'injection du milieu dans le flux de gaz d'échappement.

10. Agencement de catalyseur selon la revendication 9, **caractérisé en ce que** le point de liaison est réalisé sous forme de tubulure de retenue.

11. Véhicule automobile (7) comprenant un agencement de catalyseur (1) selon l'une quelconque des revendications précédentes.
